# EUROPEAN PATENT APPLICATION

(11) **EP 4 657 597 A1**
(43) Date of publication of application: **03.12.2025**
(21) Application number: 24179358.7
(22) Date of filing: 31.05.2024
(51) Int. Cl.: H01M 10/06, H01M 10/42, H01M 10/44, H02J 7/00

(54) **METHOD FOR DESULFATING A LEAD-ACID BATTERY**

(71) Applicant: Volvo Truck Corporation, 405 08 Göteborg (SE)
(72) Inventor: DE BRITO, David, 38230 CHARVIEU CHAVAGNEUX (FR); COLLIOT, Caroline, 69330 JONAGE (FR)
(74) Representative: Lavoix

(57) **Abstract**

A method for at least partially desulfating a lead-acid battery, comprising applying to the battery a series of current pulses formed by positive current pulses alternating with negative current pulses, wherein the alternating negative and positive current pulses are continuously applied to the battery without resting time between consecutive pulses.

## Description

### TECHNICAL FIELD

The disclosure relates generally to the field of batteries. In particular aspects, the disclosure relates to a method for desulfating a lead-acid battery.

The use of lead-acid batteries, e.g. 12V lead-acid batteries, is widely spread in the market, for example as a power source onboard of motor vehicles.

During their operational life, such batteries are subject to degradation due to the unavoidable process of sulfation.

In particular, sulfate crystals form on the lead plates of the battery damaging the battery or in any case diminishing its performance.

In order to cope with such negative effects of sulfation, there have been developed some processes for desulfating lead-acid batteries. However, these known processes have still some aspects worth of further improvements, in particular in terms of efficiency and efficacy.

### SUMMARY

According to an aspect of the disclosure, there is provided a method for at least partially desulfating a lead-acid battery, comprising applying to the battery a series of current pulses formed by positive current pulses alternating with negative current pulses, wherein the alternating negative and positive current pulses are continuously applied to the battery without resting time between consecutive pulses. This aspect of the disclosure may seek to properly and efficiently desulfate the lead-acid battery. Technical benefits may include reducing the time needed for the desulfation process since no resting times are foreseen between consecutive pulses and rendering desulfation more effective since sulfate crystals are impacted in "two different directions" by positive current pulses alternating with negative current pulses.

Optionally in some examples, including in at least one preferred example, the method comprises adjusting the duration of one or more positive and/or negative pulses of the series of current pulses. A technical benefit may include better adapting the current pulses to the specific battery to be desulfated.

Optionally in some examples, including in at least one preferred example, the duration of at least one positive and/or negative current pulse of the series of current pulses is different from duration of the other positive and/or negative current pulses of the series of current pulses. A technical benefit may include better adapting the current pulses to the specific battery to be desulfated, rendering more efficient the desulfation process since lead sulfate crystals of different sizes can be more effectively stimulated and desolved or broken, depending on the duration of each pulse, be it shorter or longer.

Optionally in some examples, including in at least one preferred example, the method comprises adjusting the maximum current value of one or more positive and/or negative pulses of the series of current pulses. A technical benefit may include better adapting the current pulses to the specific battery to be desulfated, rendering more efficient the desulfation process due to the selected intensity of the current pulses.

Optionally in some examples, including in at least one preferred example, the positive pulses have substantially the same maximum current absolute value. A technical benefit may include adapting even more the current pulses to the specific battery to be desulfated, rendering even more efficient the desulfation process due to the selected intensity of the current pulses.

Optionally in some examples, including in at least one preferred example, the negative pulses have substantially the same maximum current absolute value. A technical benefit may include adapting even more the current pulses to the specific battery to be desulfated, rendering even more efficient the desulfation process due to the selected intensity of the current pulses.

Optionally in some examples, including in at least one preferred example, the positive and negative pulses have substantially the same maximum current absolute value. A technical benefit may include providing the battery with a mean energy approximately equal to OWh, thus avoiding charging the battery.

Optionally in some examples, including in at least one preferred example, the positive pulses have the same maximum current absolute value, and the negative pulses have the same maximum current absolute value, and wherein the maximum current absolute value of the positive pulses is different from the maximum current absolute value of the negative pulses. A technical benefit may include adapting even more the current pulses to the specific battery to be desulfated, letting more positive or negative current flows through the battery.

Optionally in some examples, including in at least one preferred example, the maximum current absolute value of at least one positive and/or negative current pulse of the series of current pulses is different from the maximum current absolute value of the other positive and/or negative current pulses of the series of current pulses. A technical benefit may include adapting even more the current pulses to the specific battery to be desulfated, rendering even more efficient the desulfation process due to the selected intensity of the current pulses.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawing(s).

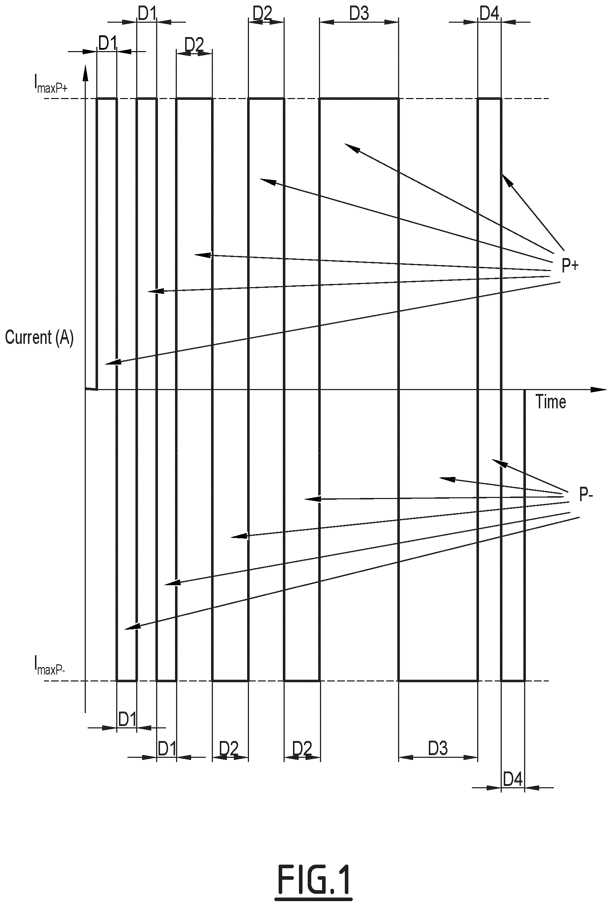

FIG. 1 is a graph schematically illustrating an exemplary series of current pulses applicable by a method for at least partially desulfating a battery, according to the present disclosure.

### DETAILED DESCRIPTION

The detailed description set forth below provides information and examples of the disclosed technology with sufficient detail to enable those skilled in the art to practice the disclosure.

Current procedures and methods for desulfating batteries are not entirely effective and efficient. The method according to the present disclosure allows optimizing the time needed to desulfate and thus regenerate batteries, and ameliorating also the efficacy thanks to the different pulses applied to the battery with more lead sulfate crystals being removed.

More in details, a method for at least for at least partially desulfating a lead-acid battery, according to the disclosure comprises applying to the battery a series of current pulses formed by positive current pulses alternating with negative current pulses, wherein the alternating negative and positive current pulses are continuously applied to the battery without resting time between consecutive pulses.

In practice, in the method according to the present disclosure there is an alternation of a positive current pulse followed by a negative current pulse which in turn is followed by another negative current pulse et cetera, and the pulses of the series are applied substantially continuously, i.e. without any time pause between two consecutives pulses.

An exemplary series of current pulses applicable by a method according to the present disclosure to a battery is schematically represented in FIG. 1, wherein positive and negative pulses are indicated by the references P+ and P-, respectively.

The series of current pulses may be applied to the battery for a total predetermined interval of time, which can be selectively adapted based on the applications.

For example, the total interval of time can be set to last from few to many hours.

In one possible example, the method according to the disclosure comprises adjusting the respective duration of one or more positive and/or negative pulses of the series of current pulses.

In one possible example, the time duration of at least one positive and/or negative current pulse of the series of current pulses is different from the time duration of the other positive and/or negative current pulses of the series of current pulses.

In particular, the method according to the present disclosure offers a wide flexibility since it is possible for example to:
- set a desired time duration equal for all pulses;
- set a first desired time duration equal for all positive pulses P+, and a second desired time duration equal for all negative pulses P-;
- set any desired number of different time durations for the various pulses along the series.

For instance, in the exemplary series illustrated in FIG. 1 (counting from the origin of and along the horizontal axis Time):
- the first two positive pulses P+ illustrated have substantially the same time duration D₁, the first negative current pulse P- there between, and also the second negative current pulse P- have substantially the same time duration D₁;
- the third and fourth positive pulses P+ illustrated have the same time duration D₂, for example longer than the first time duration D₁, and the third negative current pulse P-(applied between the third and fourth positive pulses P+) and the fourth negative current pulse P- (which follows immediately after the fourth positive pulses P+) have the same time duration D₂;
- the fifth positive pulse P+ (which follows immediately after the fourth negative pulses P+) has a time duration D₃, for example longer than the second time duration D₂, and the fifth negative pulse P- (which follows immediately after the fifth positive pulses P+) has substantially the same time duration D₃;
- the sixth positive pulse P+ (which follows immediately after the fifth negative pulses P+) has a time duration D₄, and the sixth negative pulse P- (which follows immediately after the sixth positive pulses P+) has substantially the same time duration D₄.

For example, the same time duration D₄ can be shorter than the time duration D₃, e.g. it can be substantially equal to the time duration D₁.

The various duration times can vary for example from a few tens milliseconds (ms) to few hundreds milliseconds (ms), e.g. D1 can last about 50ms and D3 can last 500ms

In one possible example, the method according to the present disclosure comprises adjusting the maximum current value Iₘₐₓ of one or more positive and/or negative pulses P+, P- of the series of current pulses.

In one possible example, the positive pulses P+ have substantially the same maximum current absolute value, indicated in FIG. 1 along the y-axis by the reference I_{maxP+}.

In one possible example, I_{maxP+}, the negative pulses P- have substantially the same maximum current absolute value indicated in FIG. 1 along the y-axis by the reference I_{maxP-}.

In one possible example, and as illustrated in FIG. 1, the positive and negative pulses P+, P- have substantially the same maximum current absolute value I_{maxP+}, I_{maxP-} (i.e. the maximum current intensity of the positive pulses is equal to the inverse of the maximum current value of the negative pulses).

In yet another possible example, the positive pulses have the same maximum current absolute value I_{maxP+}, and the negative pulses have the same maximum current absolute value I_{maxP-}, wherein the maximum current absolute value I_{maxP+} of the positive pulses P+ is different from the maximum current absolute value I_{maxP-} of the negative pulses P- (i.e. the maximum current intensity of the positive pulses is different from the inverse of the maximum current value of the negative pulses).

In a further possible example, the maximum current absolute value Iₘₐₓ of at least one positive and/or negative current pulse of the series of current pulses is different from the maximum current absolute value Iₘₐₓ of the other positive and/or negative current pulses of the series of current pulses.

The various maximum intensities of the current pulses may vary for example from 400A to 600 A.

Hence, the present disclosure foresees at least the following examples.

Example 1: A method for at least partially desulfating a lead-acid battery, comprising applying to the battery a series of current pulses formed by positive current pulses alternating with negative current pulses, wherein the alternating negative and positive current pulses are continuously applied to the battery without resting time between consecutive pulses.

Example 2: The method of example 1, comprising adjusting the duration of one or more positive and/or negative pulses of the series of current pulses.

Example 3: The method according to example 1 or 2, wherein duration of at least one positive and/or negative current pulse of the series of current pulses is different from duration of the other positive and/or negative current pulses of the series of current pulses.

Example 4: The method of one or more of the preceding examples, comprising adjusting the maximum current value Iₘₐₓ of one or more positive and/or negative pulses (P+, P- of the series of current pulses.

Example 5: The method according to one or more of the preceding examples, wherein the positive pulses P+ have substantially the same maximum current absolute value ImaxP+.

Example 6: The method according to one or more of the preceding examples, wherein the negative pulses P- have substantially the same maximum current absolute value I_{maxP-}.

Example 7: The method according to one or more of the preceding examples, wherein the positive and negative pulses P+, P- have substantially the same maximum current absolute value I_{maxP+}, I_{maxP-}.

Example 8: The method according to one or more of examples 1 to 6, wherein the positive pulses P+ have the same maximum current absolute value I_{maxP+} and the negative pulses P+ have the same maximum current absolute value I_{maxP-}, and wherein the maximum current absolute value I_{maxP+} of the positive pulses P+ is different from the maximum current absolute value I_{maxP-} of the negative pulses P-.

Example 9: The method according to one or more of the preceding examples, wherein the maximum current absolute value Iₘₐₓ of at least one positive and/or negative current pulse of the series of current pulses is different from the maximum current absolute value Iₘₐₓ of the other positive and/or negative current pulses of the series of current pulses.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

For example, when the term "approximately", or "about", or "substantial", or "substantially" is used herein, it has to be understood as encompassing an actual variation of plus or minus 5% with respect to a reference value.

It is to be understood that the present disclosure is not limited to the aspects described above and illustrated in the drawing; rather, the skilled person will recognize that many changes and modifications may be made within the scope of the present disclosure and appended claims. In the drawing and description, there have been disclosed aspects for purposes of illustration only and not for purposes of limitation, the scope of the disclosure being set forth in the following claims. It should also be noted that in order to clearly and concisely describe the present disclosure, the drawing may not necessarily be to scale and certain features of the disclosure may be shown in somewhat schematic form.

## Claims

1. A method for at least partially desulfating a lead-acid battery, comprising applying to the battery a series of current pulses formed by positive current pulses alternating with negative current pulses, wherein the alternating negative and positive current pulses are continuously applied to the battery without resting time between consecutive pulses.

2. The method according to claim 1, comprising adjusting the duration of one or more positive and/or negative pulses of the series of current pulses.

3. The method according to claim 1 or 2, wherein duration of at least one positive and/or negative current pulse of the series of current pulses is different from duration of the other positive and/or negative current pulses of the series of current pulses.

4. The method according to one or more of the preceding claims, comprising adjusting the maximum current value (Iₘₐₓ) of one or more positive and/or negative pulses (P+; P-) of the series of current pulses.

5. The method according to one or more of the preceding claims, wherein the positive pulses (P+) have substantially the same maximum current absolute value (I_{maxP+}).

6. The method according to one or more of the preceding claims, wherein the negative pulses (P-) have substantially the same maximum current absolute value (I_{maxP-}).

7. The method according to one or more of the preceding claims, wherein the positive and negative pulses (P+; P-) have substantially the same maximum current absolute value (I_{maxP+}; I_{maxP-}).

8. The method according to one or more of claims 1 to 6, wherein the positive pulses (P+) have the same maximum current absolute value (I_{maxP+}) and the negative pulses (P+) have the same maximum current absolute value (I_{maxP-}), and wherein the maximum current absolute value (I_{maxP+}) of the positive pulses (P+) is different from the maximum current absolute value (I_{maxP-}) of the negative pulses (P-).

9. The method according to one or more of the preceding claims, wherein the maximum current absolute value (Iₘₐₓ) of at least one positive and/or negative current pulse of the series of current pulses is different from the maximum current absolute value (Iₘₐₓ) of the other positive and/or negative current pulses of the series of current pulses.
